# EUROPEAN PATENT SPECIFICATION

(11) **EP 2 514 629 B1**
(45) Date of publication and mention of the grant of the patent: **14.09.2016**
(21) Application number: 10836946.3
(22) Date of filing: 05.05.2010
(51) Int. Cl.: B60M 1/26, H02G 7/18, H02G 7/02

(54) **TENSION COMPENSATION DEVICE WITH BRAKE FUNCTION**
SPANNUNGSKOMPENSATIONSVORRICHTUNG MIT BREMSFUNKTION
DISPOSITIF DE COMPENSATION DE TENSION AVEC FONCTION DE FREINAGE

(30) Priority: 15.12.2009 CN 200920213160 U
(43) Date of publication of application: 24.10.2012
(73) Proprietor: Kern-Liebers (Taicang) Co., Ltd., Jiangsu 215400 (CN)
(72) Inventor: ZHANG, Zhenwei, Taicang Jiangsu 215400 (CN); MAENDLE, Werner, Taicang Jiangsu 215400 (CN)
(74) Representative: dompatent von Kreisler Selting Werner - Partnerschaft von Patent- und Rechtsanwälten mbB
(86) International application number: PCT/CN2010/072458
(87) International publication number: WO 2011/072508

(56) References cited:
- WO-A1-2008/092296
- CN-A- 1 236 496
- CN-A- 1 285 292
- CN-A- 1 663 839
- CN-A- 1 736 763
- CN-A- 1 736 763
- CN-A- 101 104 386
- CN-A- 101 439 680
- CN-Y- 2 818 212
- CN-Y- 201 320 977
- DE-B- 1 051 896
- DE-C- 963 784
- DE-C1- 19 932 195
- FR-A- 1 132 301
- GB-A- 2 220 402
- JP-U- S5 870 928
- JP-Y- S4 411 291

## Description

### Technical Field

The invention relates to the technical feld of cables, in particular to a tension compensation device, which is mainly used for providing tension for cable messenger wires or contact wires in a power-supply network of an electrified railway and is also applicable to the same application in power plants or iron and steel factories.

### Background of the Invention

In a contact system of power supply of an electrified railway, overhead cable messenger wires (or lifting ropes) and contact wires (or cables) need to be always in tensioned state under any weather conditions so as to ensure normal work of the contact system of power supply. However, due to the impacts of thermal expansion and contraction and other objective environmental conditions, the cable messenger wires (or the lifting ropes) and the contact wires (or the cables) change in the length under different weather conditions. Therefore, tension compensation devices for the cable messenger wires or the contact wires are widely used in the contact system of power supply in the prior art, and the tension compensation devices are fixed on wire poles or walls or tops of tunnels and the like in the contact system of power supply according to the distance stipulated by industry specifications.

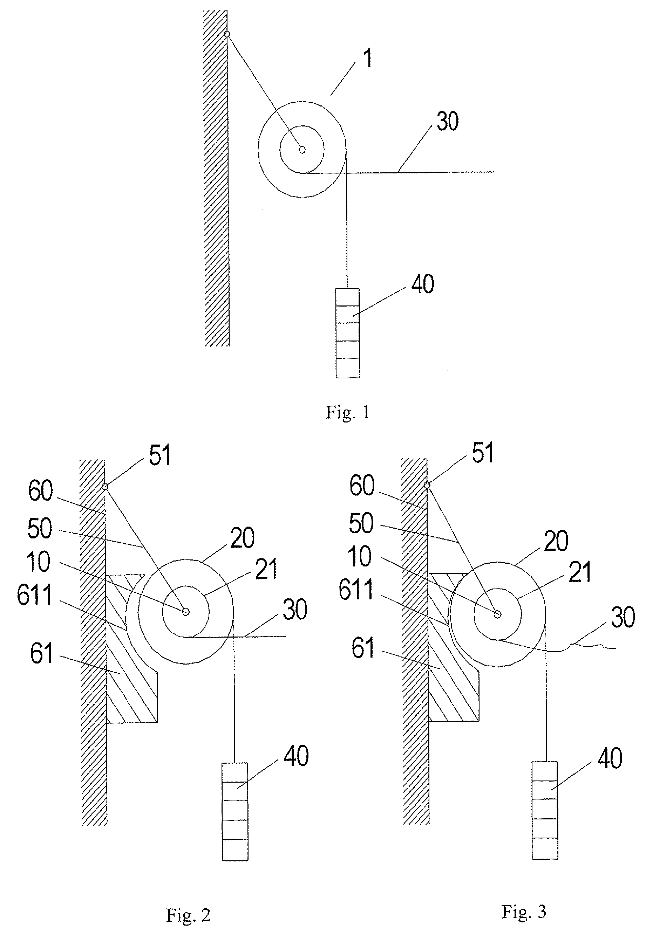

As shown in Figure 1, the principle of such tension compensation device 1 is as follows: a tension part 30 connected with the cable messenger wire or the contact wire is used for providing external compensation tension for the cable messenger wire or the contact wire to ensure that the cable messenger wire or the contact wire is always in the normal tensioned working state.

The external force can not only be generated by hanging a certain weight 40 through a weight-bearing rope, but also be provided by a torsion spring, a spiral spring or a gravity spring built in the tension compensation device, and such tension can be as large as 10KN.

However, when the technical scheme is implemented, once a fracture occurs in the tensioned cable messenger wire, the contact wire or the tension part 30, the whole tension compensation device 1 will suddenly lose the reaction force from the part and rotate in the reverse direction under the action of the weight or elastic resilience. Thus the tension part 30 will be rolled up rapidly, and the tail end of the fractured cable messenger wire, the contact wire or the tail end of the tension part will be pulled to lash violently, thereby not only damaging the tension compensation device and even possibly causing personal injury due to falling of the compensation weight, but also triggering a series of serious safety accidents.

Accordingly, some safety locking mechanisms are also designed in the prior art to inhibit or prevent the possible fast counter-rotating status of the tension compensation device.

For example, DE963784 discloses a locking tooth structure capable of buckling, DE19932195C1 discloses a conical clamping slot unit, while EP1418084B and DE102006032816B4 disclose a weight-bearing rope brake and a brake tape structure, by which the cable or the lifting rope can be braked when fractures of the cable or the lifting rope occur.

However, all the structures mentioned above have the following defects: the weight is in the vertical action direction, the mounting position of a system is very high, and the weight is easy to be damaged by an unauthorized people, etc. In addition, either the devices are not applicable to installation and application of tunnels and bridges, or they require complex implementation conditions and cost too much.

Moreover, European patent (WO2008/037386A1), Canadian patent (CA2008/2629334A1) and Chinese patent (WO2008/092296A1, CN2008/10200971.5) also disclose compact type spring-driven tension compensation devices. The devices are widely applied in practice, but the structures of safety devices thereof are generally very complex, the cost is high, and some of the devices are not provided with the safety devices.

For another example, patent WO2008/092296A1, which discloses a device according to the preamble of claim 1, discloses a safety device, which comprises a swingable locking wedge and a locking groove embedded in a rope track. Such additional brake mechanism is not only complex in structure, but also easy to be smeared or frozen due to icing and difficult to ensure the reliability under the action of aging of the system and environmental factors.

Therefore, those of skill in the art have been committed to the development of a tension compensation device with brake function, which has simple structure, good applicability, optimized function and low cost.

### Summary of the Invention

In view of the above-mentioned defects of the prior art, the technical problem to be solved by the invention is as follows: to provide a tension compensation device with brake function, which has simple structure, good applicability and low cost.

In order to realize the purpose, the invention provides a tension compensation device with brake function, comprising the features of claim 1.

Further, the shell is a hollow cylinder in whole or in part; the tension part is arranged on the main shaft or the shell through a rope wheel, and a rope track with a single groove or multiple grooves is formed on the rope wheel; and the rope track is in the shape of a cylindrical curve or a conical curve.

The concept of the invention is that, a simple mounting support is utilized for enabling the center of gravity of the tension compensation device to move upwards under the normal working state and deviate from the centre of gravity of the device under the natural hanging state. Under the normal working state, the tension compensation device implements the tension compensation function according to the working principle in the prior art.

However, when the fracture occurs in the tensioned tension part and/or a cable messenger wire and a contact wire, the stress balance of the tension compensation device will be broken due to the vanishing of reaction force from the part; based on the principle of replacement of the center of gravity, the active brake part is triggered to move to the passive brake part, and friction, clamping, a pawl, a pawl groove and other mechanical engaging ways are utilized to brake for implementing the brake function.

Due to the concept and the structural design of the invention, the tension compensation device of the invention utilizes the gravity to trigger the brake mechanism to work, thereby implementing the brake function of the tension compensation device by a simple structure, featuring the advantages of low cost, high reliability, a wide range of applications, etc., and further upgrading the use value of various tension compensation devices in the prior art.

In another embodiment, the passive brake part is arranged on the fixture, or the passive brake part is one part of the fixture.

In another embodiment, the tension compensation device further comprises a fixed support, and a rotating arm is arranged on the fixed support through the pivot shaft; one of the main shaft and the shell is fixedly arranged on the rotating arm, and the tension part is connected on the other one of the shell and the main shaft; and the fixed support further comprises a block part for limiting the motion trajectory of the rotating arm. Further, the passive brake part is arranged on the fixed support, or the passive brake part is one part of the fixed support.

In another embodiment, the active brake part is arranged on one of the main shaft and the shell, and the said one is connected with the tension part; or the active brake part is one part of one of the main shaft and the shell, and the said one is connected with the tension part.

In another embodiment, the active brake part is the circular arc-shaped outer surface of one of the main shaft and the shell, and the said one is connected with the tension part, wherein the circular arc-shaped outer surface faces the passive brake part; and the passive brake part is the circular arc-shaped surface or the variable-diameter curved surface whose circle center is not coincide with the center of the pivot shaft, or the passive brake part is the variable-diameter curved surface whose circle center is coincide with the center of the pivot shaft.

Further, the circular arc-shaped outer surface of the active brake part is the active friction surface, the circular arc-shaped surface or the variable-diameter curved surface of the passive brake part is the passive friction surface, and a friction angle formed by the active friction surface and the passive friction surface is gradually reduced along with the downward movement of the center of gravity of the tension compensation device.

In another embodiment, the active brake part is a pawl arranged on one of the main shaft and the shell, and the said one is connected with the tension part; the passive brake part comprises at least one pawl groove; or the active brake part is a cog arranged on one of the main shaft and the shell, and the said one is connected with the tension part; and the passive brake part comprises at least one cog groove.

In an alternative not forming part of the invention the tension compensation device further comprises a fixed support with a fixed arm, and a sliding groove which is obliquely arranged is formed on the fixed arm; and one of the main shaft and the shell is arranged on the fixed arm in a sliding manner through the sliding groove, the tension part is connected on the other one of the main shaft and the shell, and the active brake part is arranged on one of the main shaft and the shell, and the said one is connected with the tension part.

Further, the active brake part is the circular arc-shaped outer surface of one of the main shaft and the shell, and the said one is connected with the tension part, wherein the circular arc-shaped outer surface faces the passive brake part; and the passive brake part is a rotatable eccentric wheel arranged on the fixed support.

Further, the circular arc-shaped outer surface of the active brake part is the active friction surface, the variable-diameter curved surface of the eccentric wheel is the passive fracture surface, and the friction angle formed by the active friction surface and the passive friction surface is gradually reduced along with the downward movement of the center of gravity of the tension compensation device.

In another embodiment, the constant tension compensation device comprises a planar spiral spring used as the elastic part, and the planar spiral spring is arranged between the shell and the main shaft; and the rope wheel is arranged at the end part of the main shaft or the shell, the rope track in the shape of the conical curve is formed on the rope wheel, and the tension part is arranged on the main shaft or the shell through the rope wheel.

In combination of the figures, the concept, the specific structure and the generated technical effects of the invention are further described so as to fully understand the purposes, the characteristics and the effects of the invention.

### Brief Description of the Drawings

Figure 1 is a schematic diagram of structure of tension compensation device in the prior art;
Figure 2 is a schematic diagram of structure of the first embodiment of the invention under normal working state;
Figure 3 is a schematic diagram of structure of the first embodiment of the invention under failure state;
Figure 4 is a schematic diagram of structure of the second embodiment of the invention under normal working state;
Figure 5 is a schematic diagram of structure of the second embodiment of the invention under failure state;
Figure 6 is a schematic diagram of structure of the third embodiment of the invention under normal working state;
Figure 7 is a schematic diagram of structure of the third embodiment of the invention under failure state;
Figure 8 is a schematic diagram of structure of the fourth embodiment of the invention under normal working state;
Figure 9 is a schematic diagram of structure of the fourth embodiment of the invention under failure state;
Figure 10 is a schematic diagram of structure of a further alternative under normal working state;
Figure 11 is a schematic diagram of structure of the further alternative under failure state;

### Detailed Description of the Invention

### Embodiment 1:

As shown in Figure 2, a tension compensation device at least comprises a main shaft 10 and a shell 20, as well as a steel wire rope 30 used as a tension part and a counter weight 40.

The shell 20 is a metal hollow cylinder and can rotate under the drive of external force. A rope wheel 21 is arranged on the shell 20, a rope track with a single groove is formed on the rope wheel 21, and the rope track is in the shape of a cylindrical curve. The steel wire rope 30 is connected with the shell 20 through the rope track.

The main shaft 10 is arranged in the position of the axis of the shell 20 and not rotatable.

A torsion spring is arranged in the shell 20 (not shown in the figure). One end of the torsion spring is fixedly connected with the inner wall of the shell 20, and the other end of the torsion spring is fixedly connected with the main shaft 10.

One end of a rotating arm 50 is rotatably arranged on a fixture 60 through a pivot shaft 51. The fixture 60 can be a wall body or an upright post or the top of a tunnel and the like for hanging the tension compensation device. The other end of the rotating arm 50 is connected with the main shaft 10 of the tension compensation device.

In the embodiment, the tension compensation device further comprises one part of a brake mechanism.

Specifically, the brake mechanism comprises an active brake part and a passive brake part. In the embodiment, the tension compensation device comprises the active brake part, and the active brake part is the outer circumferential surface of the shell 20.

The passive brake part is one part of the fixture 60, as shown in the embodiment, a support body 61 is fixedly arranged on the fixture 60, the working surface 611 of the support body 61 is an inner concave circular arc-shaped surface, and the inner concave circular arc-shaped surface is the passive brake part and faces the outer circumferential surface of the shell 20 (namely, the active brake part).

When the tension compensation device is mounted, the tension compensation device is towed by the steel wire rope 30 to deviate from the center of gravity under natural hanging state so as to be in posture of enabling the center of gravity to deviate upwards. The counter weight 40 is used for balancing the stress of the tension compensation device so as to enable the tension compensation device to approach, but not be in contact with the working surface 611 of the support body 61.

Under normal working state of the tension compensation device, the tension compensation device utilizes the torsion spring in the shell 20 to balance the stress of the steel wire rope 30 so as to keep the steel wire rope 30 under the tensioned working state under any environmental conditions.

Particularly, the circular arc-shaped working surface 611 on the support body 61 is intersected with the swing trajectory of the main shaft 10 around the pivot shaft 51, and the radian of the working surface 611 can enable the friction angle generated by interaction of the two to be reduced gradually along with the downward movement of the main shaft 10.

As shown in Figure 3, when the tension compensation device fails due to sudden fracture of the steel wire rope 30, as the force from the steel wire rope 30 disappears suddenly, the stress balance of the tension compensation device is broken, the center of gravity of the tension compensation device moves downwards for providing gravity, and the outer circumferential surface (namely, the active brake part) of the rotating and falling shell 20 is in friction with the working surface 611 (namely, the passive brake part) of the support body 61 so as to trigger the active brake part to be in brake engaging with the passive brake part.

As the circular arc-shaped surface as the passive brake part is in friction with the outer circumferential surface of the shell as the active brake part, and the friction angle is gradually reduced, the shell 20 finally stops rotating due to locking so as to implement the brake function.

In another embodiment of the invention, the steel wire rope 30 can also be arranged on the main shaft 10, and the main shaft 10 is rotatable, while the shell 20 can not rotate and is fixed at one end of the rotating arm 50.

In the embodiment, the structure of the passive brake part is the same with that in the above embodiment. The active brake part is the outer circular surface of the main shaft or the outer circular surface of a wheel hub fixed on the main shaft.

In another embodiment of the invention, the active brake part can engage with the passive brake part through a gear and a gear groove, or through a pawl and a pawl groove for implementing brake.

### Embodiment 2:

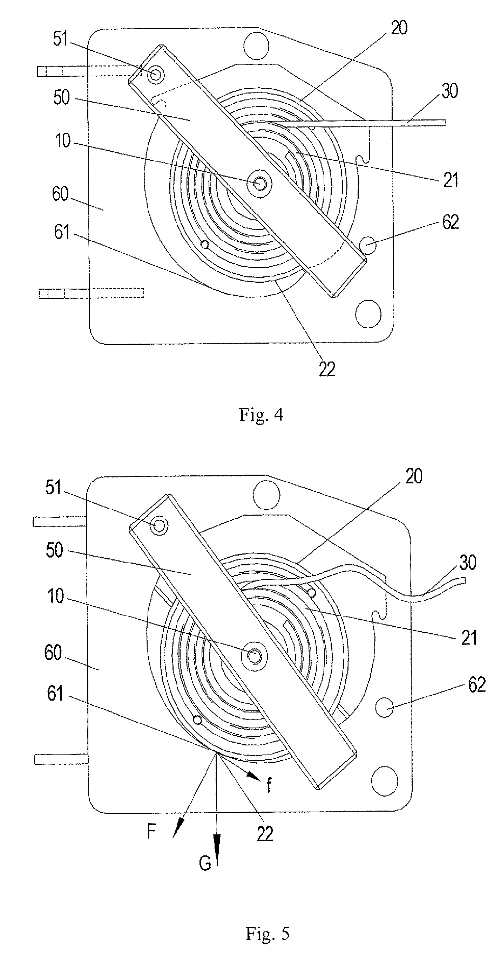

As shown in Figure 4, in the embodiment, a tension compensation device at least comprises a main shaft 10 and a shell 20, and the main shaft 10 is arranged in the position of the axis of the shell 20 and can not rotate. The shell 20 is a metal hollow cylinder and can rotate around the main shaft 10 under the drive of external force.

The tension part is a steel wire rope 30 and arranged on the shell 20 through a rope wheel 21, a rope track with multiple grooves is formed on the rope wheel, and the rope track is in the shape of a conical curve.

A planar spiral spring used as a torsion spring is arranged in the shell 20 (not shown in the figure), one end of the planar spiral spring is fixedly connected with the inner wall of the shell 20, and the other end of the planar spiral spring is fixedly connected with the main shaft 10. The shell 20 is used for connecting with the steel wire rope 30, and the planar spiral spring arranged between the main shaft 10 and the shell 20 is used for providing a torque which reacts on the steel wire rope 30 therebetween.

The tension compensation device further comprises the whole of a brake mechanism, and the brake mechanism comprises an active brake part and a passive brake part.

The tension compensation device further comprises a fixed support 60, a rotating arm 50 is arranged on the fixed support 60 through a pivot shaft 51, and a block part 62 for limiting the motion trajectory of the rotating arm 50 is further arranged on the fixed support 60.

The main shaft 10 is fixedly arranged on the rotating arm 50 and not rotatable, but can swing with the rotating arm 50.

In the embodiment, the passive brake part 61 is one part of the fixed support 60, in particular, a variable-diameter curved surface whose circle center does not coincide with the center of the pivot shaft 51, and the variable-diameter curved surface is the passive friction surface.

The active brake part 22 is the circular arc-shaped outer surface on the shell 20, which faces the passive brake part 61, and the circular arc-shaped outer surface of the active brake part 22 is the active friction surface.

Under normal working state, the tension compensation device is towed by the steel wire rope 30 to deviate from the center of gravity under natural hanging state to be in posture of enabling the center of gravity to deviate upwards.

As shown in Figure 5, when the tension compensation device fails due to fracture of the steel wire rope 30, the main shaft 10 drives the shell 20 to swing and move downwards together with the rotating arm 50, as the shell 20 is simultaneously rotating. During the process of swinging downwards of the shell 20, the active brake part 22 is in friction with the passive brake part 61 to generate the brake effect.

The gravity G of the tension compensation device is decomposed to pressure F being vertical to a friction point and friction force f being tangent to the friction circular arc-shaped surface during the friction process between the active friction surface and the passive friction surface. As the passive brake part 61 is the variable-diameter curved surface whose circle center is not coincide with the center of the pivot shaft 51, a friction angle formed by the active friction surface and the passive friction surface is gradually reduced along with downward movement of the center of gravity of the tension compensation device, and the friction force f obtained by decomposing the gravity G is increased gradually to gradually achieve the purpose of completely overcoming elastic reaction force of the planar spiral spring in the shell 20 and finally implement the brake function.

Therefore, the brake mechanism in the invention can implement the brake function by being triggered by the gravity G of the tension compensation device.

In another embodiment, the shell 20 can be fixedly arranged on the rotating arm 50, and the steel wire rope 30 is connected on the main shaft 10. The passive brake part is arranged on the fixed support 60 and is the circular arc-shaped surface whose circle center is not coincide with the center of the pivot shaft 51. The active brake part is arranged on the main shaft 10 and is the circular arc-shaped outer surface of the main shaft 10, which faces the passive brake part.

In another embodiment, the passive brake part can also be a variable-diameter curved surface whose circle center is in coincide with the center of the pivot shaft 51, further meet the technical requirement of enabling the friction angle formed by the active friction surface and the passive friction surface to be gradually reduced along with downward movement of the center of gravity of the tension compensation device and finally obtain the technical effect which is basically the same.

### Embodiment 3:

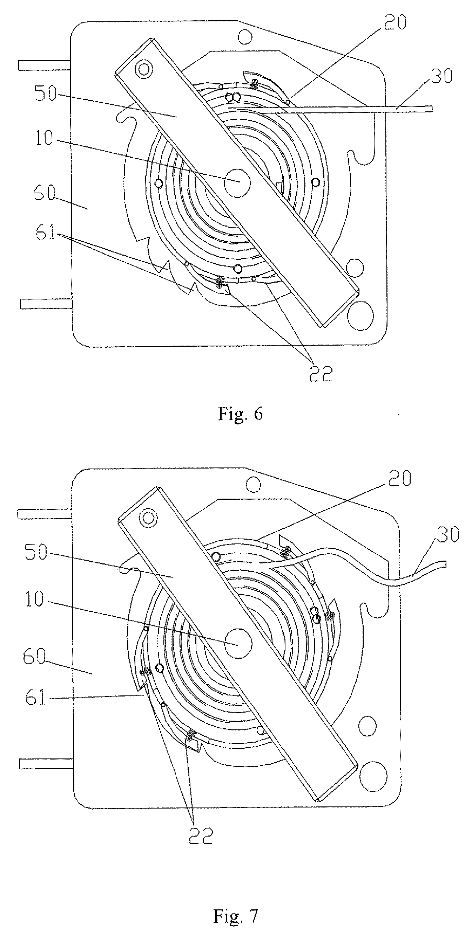

As shown in Figure 6, the structure of the embodiment is basically the same with that in the embodiment 2, a tension compensation device also comprises a main shaft 10, a shell 20, a tension part 30, a rotating arm 50, a fixed support 60 and other parts, and the differences are that, an active brake part comprises a plurality of pawls 22 arranged on the outer circumferential surface of the shell 20, and a passive brake part comprises a plurality of pawl grooves 61 arranged on the fixed support 60.

As shown in Figure 7, under failure state of the tension compensation device, due to the action of the gravity of the tension compensation device, the main shaft 10 and the shell 20 swing downwards along with the rotating arm 50, and the shell 20 is rotating during the process of swinging downwards so as to drive the pawls 22 to open and enable the pawls 22 to engage with the pawl grooves 61 for braking.

In another embodiment, the tension part 30 can also be arranged on the main shaft 10. At this time, the active brake part comprises the plurality of the pawls arranged on the outer circumferential surface of the main shaft, and the structure of the passive brake part is unchanged.

### Embodiment 4:

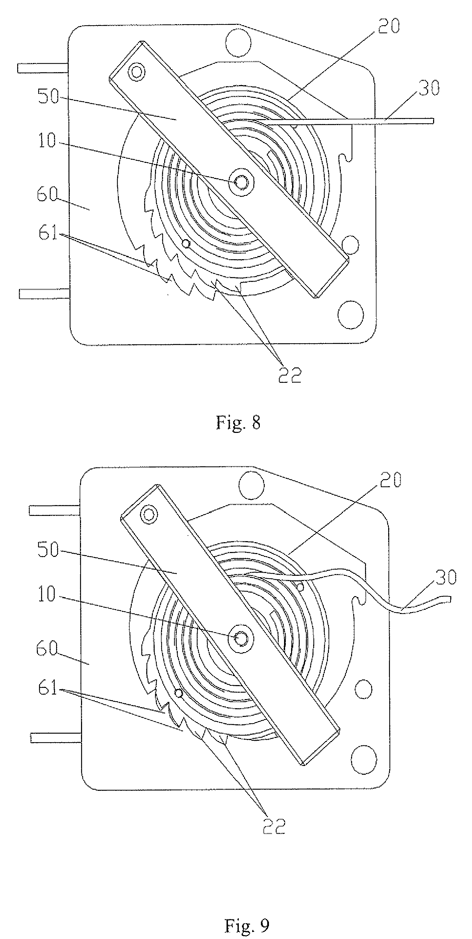

As shown in Figure 8, the structure of the embodiment is basically the same with that in the embodiment 3, a tension compensation device also comprises a main shaft 10, a shell 20, a tension part 30, a rotating arm 50, a fixed support 60 and other parts, and the differences are that, an active brake part comprises cogs 22 arranged on the outer circumferential surface of the shell 20, and a passive brake part comprises a plurality of cog grooves 61 arranged on the fixed support 60.

As shown in Figure 9, under failure state of the tension compensation device, due to the action of the gravity of the tension compensation device, the main shaft 10 and the shell 20 swing downwards along with the rotating arm 50, and the shell 20 is rotating during the process of swinging downwards so as to drive the cogs 22 to engage with the cog grooves 61 for braking.

In another embodiment, the tension part can also be arranged on the main shaft 10. At this time, the active brake part comprises the plurality of the cogs arranged on the outer circumferential surface of the main shaft, and the structure of the passive brake part is unchanged.

Further alternative :

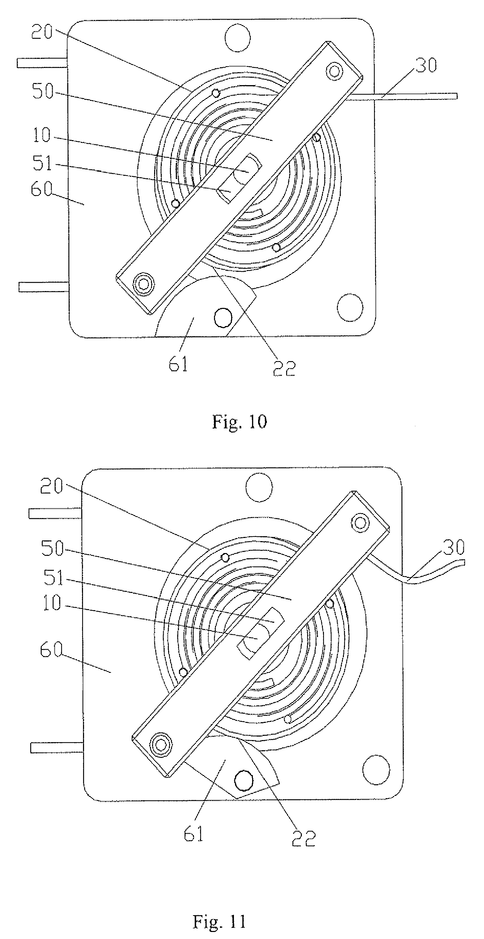

As shown in Figure 10, the structure of the further alternative is basically the same with that in the embodiment 2, a tension compensation device also comprises a main shaft 10, a shell 20, a tension part 30, a fixed support 60 and other parts, and the differences are that, a fixed arm 50 is arranged on the fixed support 60, the fixed arm 50 can not rotate, and a sliding groove 51 which is obliquely arranged is formed on the fixed arm.

The main shaft 10 is arranged in the fixed arm 50 in a sliding manner through the sliding groove 51. The tension part 30 is connected on the shell 20, and an active brake part is arranged on the shell 20.

A passive brake part is a rotatable eccentric wheel 61 arranged on the fixed support 60, and the variable-diameter curved surface of the eccentric wheel 61 is the passive friction surface.

Further, the active brake part 22 is the circular arc-shaped outer surface on the shell 20, which faces the passive brake part, and the circular arc-shaped outer surface of the active brake part 22 is the active friction surface.

As shown in Figure 11, under failure state of the tension compensation device, due to the action of gravity of the tension compensation device, the main shaft 10 drives the shell 20 to slide downwards along the sliding groove 51, and the shell is also rotating during the process of sliding downwards, the active brake part 22 on the shell 20 is in friction with the eccentric wheel 61, and the active friction surface is in friction with the passive friction surface. As the radius of the eccentric wheel is increased gradually during rotation, the friction force between the active brake part 22 and the eccentric wheel 61 during the friction action is finally increased gradually to obtain the brake effect and implement the brake function.

In another alternative, the shell 20 can be arranged on the fixed arm 50 in the sliding manner through the sliding groove 51, and the tension part 30 is connected with the main shaft 10. The active brake part is arranged on the main shaft 10, and the structure of the passive brake part is unchanged.

The above-mentioned content describes the preferred embodiments of the invention. It should be understood that the ordinary technology in the field can make a lot of modifications and changes according to the concept of the invention without creative work.

## Claims

1. A tension compensation device with brake function, which at least comprises a main shaft (10) and a shell (20) rotating relative to each other, wherein one of the main shaft (10) and the shell (20) is used for connecting with a tension part (30), and an elastic part is arranged between the main shaft (10) and the shell (20) so as to provide a torque therebetween which reacts on the tension part (30); wherein the tension compensation device also comprises an active brake part (22) of a brake mechanism, a passive brake part (61) of the brake mechanism, and a fixture (60); **characterized in that** when the tension compensation device fails due to the fracture of the tension part (30), the brake mechanism is triggered by gravity to implement the brake function;
wherein a rotating arm (50) is rotatably arranged on the fixture (60) through a pivot shaft (51), one of the main shaft (10) and the shell (20) being fixedly arranged on the rotating arm (50);
and wherein under a normal working state the shell (20) and the main shaft (10) are towed by the tension part (30) to deviate from the center of gravity of the tension compensation device under a natural hanging state so as to be in posture of enabling the center of gravity to deviate upwards; whereby the tension compensation device is configured such that when the tension compensation device fails due to the fracture of the tension part (30), the shell (20) and the main shaft (10) move downwards and further trigger the active brake part (22) to be in braking engagement with the passive brake part (61).

2. The tension compensation device according to claim 1, **characterized in that** the passive brake part (61) is arranged on the fixture (60), or the passive brake part is one part of the fixture (60).

3. The tension compensation device according to claim 1, **characterized in that** the tension compensation device further comprises a fixed support (60), and the rotating arm (50) is arranged on the fixed support (60) through the pivot shaft (51); one of the main shaft (10) and the shell (20) is fixedly arranged on the rotating arm (50), and the tension part (30) is connected on the other one of the shell (20) and the main shaft (10); and the fixed support (60) further comprises a block part (62) for limiting the motion trajectory of the rotating arm (50).

4. The tension compensation device according to claim 3, **characterized in that** the passive brake part (61) is arranged on the fixed support (60), or the passive brake part (61) is one part of the fixed support (60).

5. The tension compensation device according to any one of claims 1-4, **characterized in that** the active brake part (22) is arranged on one of the main shaft (10) and the shell (20), and the said one is connected with the tension part (30); or the active brake part (22) is one part of one of the main shaft (10) and the shell (20), and the said one is connected with the tension part (30).

6. The tension compensation device according to claim 5, **characterized in that** the active brake part (22) is the circular arc-shaped outer surface of one of the main shaft (10) and the shell (20), and the said one is connected with the tension part (30), and the circular arc-shaped outer surface faces the passive brake part (61); and the passive brake part (61) is the circular arc-shaped surface or the variable-diameter curved surface whose circle center is not coincident with the center of the pivot shaft (51), or the passive brake part (61) is the variable-diameter curved surface whose circle center is coincident with the center of the pivot shaft (51).

7. The tension compensation device according to claim 6, **characterized in that** the circular arc-shaped outer surface of the active brake part (22) is the active friction surface, the circular arc-shaped surface or the variable-diameter curved surface of the passive brake part (61) is the passive friction surface, and a friction angle formed by the active friction surface and the passive friction surface is gradually reduced along with the downward movement of the center of gravity of the tension compensation device.

8. The tension compensation device according to claim 7, **characterized in that** the active brake part (22) is a pawl arranged on one of the main shaft (10) and the shell (20), and the said one is connected with the tension part (30); the passive brake part (61) comprises at least one pawl groove; or the active brake part (22) is a cog arranged on one of the main shaft and the shell, and the said one is connected with the tension part (30); and the passive brake part (61) comprises at least one cog groove.

9. The tension compensation device according to claim 1, **characterized in that** the shell (20) is a hollow cylinder in whole or in part; the tension part (30) is arranged on the main shaft (10) or the shell (20) through a rope wheel (21), and a rope track with a single groove or multiple grooves is formed on the rope wheel (21); and the rope track is in the shape of a cylindrical curve or a conical curve.

10. The tension compensation device according to any one of claims 1-4, **characterized in that** the tension compensation device is a constant tension compensation device.

11. The tension compensation device according to claims 9 and 10 , **characterized in that** the constant tension compensation device comprises a planar spiral spring used as the elastic part, and the planar spiral spring is arranged between the shell (20) and the main shaft (10); and the rope wheel (21) is arranged at the end part of the main shaft (10) or the shell (20), the rope track in the shape of the conical curved line is formed on the rope wheel (21), and the tension part (30) is arranged on the main shaft (10) or the shell (20) through the rope wheel (21).

## Patentansprüche

1. Spannungskompensationsvorrichtung mit Bremsfunktion, welche mindestens eine Hauptwelle (10) und ein Gehäuse (20) aufweist, die relativ zueinander drehen, wobei entweder die Hauptwelle (10) oder das Gehäuse (20) zur Verbindung mit einem Spannungsteil (30) dient und ein auf das Spannungsteil (30) reagierendes elastisches Teil zwischen der Hauptwelle (10) und dem Gehäuse (20) angeordnet ist, um zwischen diesen ein Drehmoment zu bewirken, wobei die Spannungskompensationsvorrichtung ferner ein aktives Bremsteil (22) eines Bremsmechanismus, ein passives Bremsteil (61) des Bremsmechanismus und eine Halterung (60) aufweist, **dadurch gekennzeichnet, dass** bei einem Ausfall der Spannungskompensationsvorrichtung aufgrund des Reißens des Spannungsteils (30), der Bremsmechanismus durch Schwerkraft ausgelöst wird, um die Bremsfunktion zu implementieren;
wobei ein Dreharm (50) durch eine Schwenkwelle (51) drehbar an der Halterung (60) angeordnet ist, wobei entweder die Hauptwelle (10) oder das Gehäuse (20) fest an dem Dreharm (50) angeordnet ist;
und wobei im normalen Arbeitszustand das Gehäuse (20) und die Hauptwelle (10) von dem Spannungsteil (30) gezogen werden, um von dem Schwerpunkt der Spannungskompensationsvorrichtung in einem natürlichen Hängezustand abzuweichen, so dass sie sich in einer Lage befinden, welche das Abweichen des Schwerpunkts nach oben ermöglicht; wobei die Spannungskompensationsvorrichtung derart konfiguriert ist, dass bei einem Ausfall der Spannungskompensationsvorrichtung aufgrund des Reißens des Spannungsteils (30), das Gehäuse (20) und die Hauptwelle (10) sich abwärts bewegen und ferner das aktive Bremsteil (22) auslösen, so dass dieses in Bremseingriff mit dem passiven Bremsteil (61) gelangt.

2. Spannungskompensationsvorrichtung nach Anspruch 1, **dadurch gekennzeichnet, dass** das passive Bremsteil (61) an der Halterung (60) angeordnet ist oder das passive Bremsteil ein Teil der Halterung (60) ist.

3. Spannungskompensationsvorrichtung nach Anspruch 1, **dadurch gekennzeichnet, dass** die Spannungskompensationsvorrichtung ferner eine feste Stütze (60) aufweist und der Dreharm (50) an der festen Stütze (60) über die Schwenkwelle (51) angeordnet ist; wobei entweder die Hauptwelle (10) oder das Gehäuse (20) fest an dem Dreharm (50) angeordnet ist und das Spannungsteil (30) mit dem jeweils anderen Element, nämlich dem Gehäuse (20) oder der Hauptwelle (10), verbunden ist; und wobei die feste Stütze (60) ferner ein Blockierteil (62) zum Begrenzen der Bewegungsbahn des Dreharms (50) aufweist.

4. Spannungskompensationsvorrichtung nach Anspruch 3, **dadurch gekennzeichnet, dass** das passive Bremsteil (61) an der festen Stütze (60) angeordnet ist, oder das passive Bremsteil (61) ein Teil der festen Stütze (60) ist.

5. Spannungskompensationsvorrichtung nach einem der Ansprüche 1 - 4, **dadurch gekennzeichnet, dass** das aktive Bremsteil (22) entweder an der Hauptwelle (10) oder dem Gehäuse (20) angeordnet ist und das jeweilige Element mit dem Spannungsteil (30) verbunden ist; oder das aktive Bremsteil (22) ein Teil entweder der Hauptwelle (10) oder des Gehäuses (20) ist und das jeweilige Element mit dem Spannungsteil (30) verbunden ist.

6. Spannungskömpensationsvorrichtung nach Anspruch 5, **dadurch gekennzeichnet, dass** das aktive Bremsteil (22) die kreisbogenförmige Außenfläche entweder der Hauptwelle (10) oder des Gehäuses (20) ist und das jeweilige Element mit dem Spannungsteil (30) verbunden ist, und die kreisbogenförmige Außenfläche dem passiven Bremsteil (61) zugewandt ist; und wobei das passive Bremsteil (61) die kreisbogenförmige Fläche oder die gebogene Fläche mit variablem Durchmesser ist, deren Kreismittelpunkt nicht mit dem Mittelpunkt der Drehwelle (51) zusammenfällt, oder das passive Bremsteil (61) die gebogene Fläche mit variablem Durchmesser ist, deren Kreismittelpunkt mit dem Mittelpunkt der Drehwelle (51) zusammenfällt.

7. Spannungskompensationsvorrichtung nach Anspruch 6, **dadurch gekennzeichnet, dass** die kreisbogenförmige Außenfläche des aktiven Bremsteils (22) die aktive Bremsfläche ist, die kreisbogenförmige Fläche oder die gebogene Fläche mit variablem Durchmesser des passiven Bremsteils (61) die passive Bremsfläche ist, und ein von der aktiven Bremsfläche und der passiven Bremsfläche gebildeter Reibungswinkel mit der Abwärtsbewegung des Schwerpunkts der Spannungskompensationsvorrichtung allmählich abnimmt.

8. Spannungskompensationsvorrichtung nach Anspruch 7, **dadurch gekennzeichnet, dass** das aktive Bremsteil (22) eine entweder an der Hauptwelle (10) oder dem Gehäuse (20) angeordnete Klinke ist und das jeweilige Element mit dem Spannungsteil (30) verbunden ist; wobei das passive Bremsteil (61) mindestens eine Klinkennut aufweist; oder das aktive Bremsteil (22) ein Zahnrad ist, das entweder auf der Hauptwelle oder an dem Gehäuse angeordnet ist, und das jeweilige Element mit dem Spannungsteil (30) verbunden ist; und wobei das passive Bremsteil (61) mindestens eine Zahnradnut aufweist.

9. Spannungskompensationsvorrichtung nach Anspruch 1, **dadurch gekennzeichnet, dass** das Gehäuse (20) teilweise oder vollständig als Hohlzylinder ausgebildet ist; wobei das Spannungsteil (30) an der Hauptwelle (10) oder dem Gehäuse (20) über eine Seilscheibe (21) angeordnet ist, und eine Seilspur mit einer einzelnen oder mehreren Nuten in der Seilscheibe (21) ausgebildet ist; und wobei die Seilspur als zylindrische Krümmung oder konische Krümmung ausgebildet ist.

10. Spannungskompensationsvorrichtung nach einem der Ansprüche 1 - 4, **dadurch gekennzeichnet, dass** die Spannungskompensationsvorrichtung eine Konstant-Spannungskompensationsvorrichtung ist.

11. Spannungskompensationsvorrichtung nach den Ansprüchen 9 und 10, **dadurch gekennzeichnet, dass** die Konstant-Spannungskompensationsvorrichtung eine als das elastische Teil dienende planare Spiralfeder aufweist, und die planare Spiralfeder zwischen dem Gehäuse (20) und der Hauptwelle (10) angeordnet ist; und wobei die Seilscheibe (21) am Endbereich der Hauptwelle (10) oder des Gehäuses (20) angeordnet ist, wobei die Seilspur in Form einer konisch gekrümmten Linie in der Seilscheibe (21) ausgebildet ist, und das Spannungsteil (30) an der Hauptwelle (10) oder dem Gehäuse (20) über die Seilscheibe (21) verbunden ist.

## Revendications

1. Dispositif de compensation de tension équipé d'une fonction de freinage, qui comprend au moins un arbre principal (10) et une coque (20) rotatifs l'un par rapport à l'autre, l'un parmi l'arbre principal (10) et la coque (20) étant utilisé pour le raccordement à un élément de tension (30), et un élément élastique étant disposé entre l'arbre principal (10) et la coque (20) de manière à produire entre ceux-ci un couple qui réagit sur l'élément de tension (30) ; le dispositif de compensation de tension comprenant en outre un élément de freinage actif (22) d'un mécanisme de freinage, un élément de freinage passif (61) du mécanisme de freinage, et un élément de fixation (60) ; **caractérisé en ce que**, lorsque le dispositif de compensation de tension fait défaut en raison de la rupture de l'élément de tension (30), le mécanisme de freinage est déclenché par la gravité pour mettre en oeuvre la fonction de freinage ;
un bras rotatif (50) étant disposé de manière rotative sur l'élément de fixation (60) par l'intermédiaire d'un arbre de pivotement (51), l'un parmi l'arbre principal (10) et la coque (20) étant disposé de façon fixe sur le bras rotatif (50) ;
et, dans un état de fonctionnement normal, la coque (20) et l'arbre principal (10) étant tirés par l'élément de tension (30) pour dévier du centre de gravité du dispositif de compensation de tension dans un état de suspension naturel afin d'être en mesure de permettre au centre de gravité de dévier vers lé haut ; le dispositif de compensation de tension étant configuré de telle sorte que, lorsque le dispositif de compensation de tension fait défaut en raison de la rupture de l'élément de tension (30), la coque (20) et l'arbre principal (10) se déplacent vers le bas et déclenche en outre l'élément de freinage actif (22) pour être en engagement de freinage avec l'élément de freinage passif (61).

2. Dispositif de compensation de tension selon la revendication 1, **caractérisé en ce que** l'élément de freinage passif (61) est disposé sur l'élément de fixation (60) ou l'élément de freinage passif est une partie de l'élément de fixation (60).

3. Dispositif de compensation de tension selon la revendication 1, **caractérisé en ce que** le dispositif de compensation de tension comprend en outre un support fixe (60) et le bras rotatif (50) est disposé sur le support fixe (60) par le biais de l'arbre de pivotement (51) ; l'un parmi l'arbre principal (10) et la coque (20) est disposé de façon fixe sur le bras rotatif (50) et l'élément de tension (30) est relié à l'autre parmi la coque (20) et l'arbre principal (10) ; et le support fixe (60) comprend en outre un élément de blocage (62) destiné à limiter la trajectoire de mouvement du bras rotatif (50).

4. Dispositif de compensation de tension selon la revendication 3, **caractérisé en ce que** l'élément de freinage passif (61) est disposé sur le support fixe (60), ou l'élément de freinage passif (61) est une partie du support fixe (60).

5. Dispositif de compensation de tension selon l'une quelconque des revendications 1 à 4, **caractérisé en ce que** l'élément de freinage actif (22) est disposé sur l'un parmi l'arbre principal (10) et la coque (20) et ledit un parmi ceux-ci est relié à l'élément de tension (30) ; ou l'élément de freinage actif (22) est une partie de l'un parmi l'arbre principal (10) et la coque (20), et ledit un parmi ceux-ci est relié à l'élément de tension (30).

6. Dispositif de compensation de tension selon la revendication 5, **caractérisé en ce que** l'élément de freinage actif (22) est la surface extérieure en arc de cercle de l'un parmi l'arbre principal (10) et la coque (20) et ledit un parmi ceux-ci est relié à l'élément de tension (30) et la surface extérieure en arc de cercle fait face à l'élément de freinage passif (61) ; et l'élément de freinage passif (61) est la surface en arc de cercle ou la surface courbe à diamètre variable dont le centre de cercle ne coïncide pas avec le centre de l'axe de pivotement (51), ou l'élément de freinage passif (61) est la surface courbe à diamètre variable dont le centre de cercle coïncide avec le centre de l'axe de pivotement (51).

7. Dispositif de compensation de tension selon la revendication 6, **caractérisé en ce que** la surface extérieure en arc de cercle de l'élément de freinage actif (22) est la surface de friction active, la surface en arc de cercle ou la surface courbe à diamètre variable de l'élément de freinage passif (61) est la surface de friction passive, et un angle de friction formé par la surface de friction active et la surface de friction passive est réduit progressivement en même temps que le mouvement vers le bas du centre de gravité du dispositif de compensation de tension.

8. Dispositif de compensation de tension selon la revendication 7, **caractérisé en ce que** l'élément de freinage actif (22) est un cliquet disposé sur l'un parmi l'arbre principal (10) et la coque (20) et ledit un parmi ceux-ci est relié à l'élément de tension (30) ; l'élément de freinage passif (61) comprend au moins une gorge de cliquet ; ou l'élément de freinage actif (22) est une dent disposée sur l'un parmi l'arbre principal et la coque, et ledit un parmi ceux-ci est relié à l'élément de tension (30) ; et l'élément de freinage passif (61) comprend au moins une gorge de dent.

9. Dispositif de compensation de tension selon la revendication 1, **caractérisé en ce que** la coque (20) est un cylindre creux en totalité ou en partie ; l'élément de tension (30) est disposé sur l'arbre principal (10) ou la coque (20) par le biais d'une roue à câble (21) et une piste de câble pourvue d'une seule gorge ou de plusieurs gorges est formée sur la roue de câble (21) ; et la piste de câble se présente sous la forme d'une courbe cylindrique ou d'une courbe conique.

10. Dispositif de compensation de tension selon l'une quelconque des revendications 1 à 4, **caractérisé en ce que** le dispositif de compensation de tension est un dispositif de compensation de tension constante.

11. Dispositif de compensation de tension selon les revendications 9 et 10, **caractérisé en ce que** le dispositif de compensation de tension constante comprend un ressort plat en spirale utilisé comme élément élastique et le ressort plat en spirale est disposé entre la coque (20) et l'arbre principal (10) ; et la roue de câble (21) est disposée à la partie d'extrémité de l'arbre principal (10) ou de la coque (20), la piste de câble sous la forme de la courbe conique est formée sur la roue de câble (21), et l'élément de tension (30) est disposé sur l'arbre principal (10) ou la coque (20) par le biais de la roue de câble (21).
